# EUROPEAN PATENT APPLICATION

(11) **EP 4 817 705 A1**
(43) Date of publication of application: **07.10.2026**
(21) Application number: 26166391.8
(22) Date of filing: 20.03.2026
(51) Int. Cl.: A63F 13/213, A63F 13/537, A63F 13/655

(54) **COMPUTER-IMPLEMENTED METHOD, COMPUTER PROGRAM, AND SYSTEM**

(30) Priority: 31.03.2025 JP 2025058931
(71) Applicant: Nintendo Co., Ltd., Kyoto-shi, Kyoto 601-8501 (JP)
(72) Inventor: SUZUKI, Toshiaki, Kyoto, 601-8501 (JP); TANAKA, Kentaro, Tokyo, 151-0051 (JP)
(74) Representative: Lorenz Seidler Gossel Part. mbB

(57) **Abstract**

A computer-implemented method includes performing game operations. The game operations include: acquiring a captured moving image based on a camera moving image captured by a camera; with respect to a plurality of first areas arranged side by side in an image of the captured moving image, executing one or more games, each of which changes game states of a plurality of players respectively corresponding to the plurality of first areas, based on at least a part of a body of a respective user included in each of the plurality of first areas; and executing a preparation process before execution of the one or more games. The preparation process includes: displaying a preparation image in which a plurality of guide images respectively indicating a plurality of second areas arranged side by side and respectively corresponding to the plurality of first areas are arranged on a displayed camera moving image based on the captured moving image; and determining that at least a part of the body of the respective user is included in each of the plurality of second areas.

## Description

The present disclosure relates to a computer-implemented method, a computer program, and a system.

### INTRODUCTION

A system that displays a moving image captured by a camera that can capture a user, together with a game image, is known (for example, Japanese Patent Laying-Open No. 2012-174237).

### SUMMARY

There is room for improvement in a process for displaying an image of a user together with an image of a game.

(Configuration 1) A computer-implemented method according to an embodiment includes executing game operations. The game operations include: acquiring a captured moving image based on a camera moving image captured by a camera; with respect to a plurality of first areas arranged side by side in an image of the captured moving image, executing one or more games, each of which changes game states of a plurality of players respectively corresponding to the plurality of first areas, based on at least a part of a body of a respective user included in each of the plurality of first areas; and executing a preparation process before execution of the one or more games. The preparation process includes: displaying a preparation image in which a plurality of guide images respectively indicating a plurality of second areas arranged side by side and respectively corresponding to the plurality of first areas are arranged on a displayed camera moving image based on the captured moving image; and determining that at least a part of the body of the respective user is included in each of the plurality of second areas.

(Configuration 2) In Configuration 1, the one or more games may include a plurality of games in each of which at least a vertical position or a vertical size of the first areas is different. The game operations may include executing a specific pre-game preparation process after the preparation process and before at least one game among the one or more games is executed. The specific pre-game preparation process may include: displaying a specific pre-game preparation image in which a plurality of second guide images respectively indicating a plurality of third areas arranged side by side and respectively corresponding to the plurality of first areas in the at least one game before execution are arranged on the displayed camera moving image based on the captured moving image; and determining that at least a part of the body of the respective user is included in each of the third areas.

(Configuration 3) In Configuration 1 or 2, the preparation process may include determining that a state in which at least a part of the body of the respective user is included in all of the plurality of second areas continues for more than a first period of time. The specific pre-game preparation process may include either one of: determining that at least a part of the body of the respective user is included in all of the plurality of third areas; or determining that a state in which at least a part of the body of the respective user is included in all of the plurality of third areas continues for more than a second period of time shorter than the first period of time.

(Configuration 4) In any one of Configurations 1 to 3, when it is determined that at least a part of the body of the user is included in a third area among the plurality of third areas, the specific pre-game preparation process may include displaying, at a position corresponding to at least a part of the body of the user included in the third area, an object that is the same as an object displayed during execution of the at least one game before execution.

(Configuration 5) In any one of Configurations 1 to 4, the preparation process may include determining that a state in which at least a part of the body of the respective user is included in a second area among the plurality of second areas continues for more than a first period of time for all of the plurality of second areas.

(Configuration 6) In any one of Configurations 1 to 5, the preparation process may include, when at least a part of the body of the respective user is included in a second area among the plurality of second areas for all of the plurality of second areas, displaying the plurality of guide images in a display mode different from a display mode in other cases.

(Configuration 7) In any one of Configurations 1 to 6, the preparation process may include changing a correspondence between the plurality of first areas and the plurality of players according to a user operation.

(Configuration 8) In any one of Configurations 1 to 7, the one or more games may include a plurality of games in each of which at least a vertical position or a vertical size of the first areas is different. The game operations may include executing a specific pre-game preparation process after the preparation process and before at least one game among the one or more games is executed. The specific pre-game preparation process may include: displaying a specific pre-game preparation image in which a plurality of second guide images respectively indicating a plurality of third areas arranged side by side and respectively corresponding to the plurality of first areas in the at least one game before execution are arranged on the displayed camera moving image based on the captured moving image; and determining that at least a part of the body of the respective user is included in each of the plurality of third areas. The game operations may include displaying an image in which a plurality of partial moving images respectively corresponding to the plurality of first areas cut out from the captured moving image are arranged at positions according to the changed correspondence after the preparation process and before at least one game among the one or more games is executed.

(Configuration 9) In any one of Configurations 1 to 8, the game operations may include executing one or more games, each of which changes a game state of a player corresponding to a first area among the plurality of first areas based on at least a part of a body of a user included in the first area in an image of a captured moving image. The preparation process may include: displaying a preparation image in which a guide image indicating a second area among the plurality of second areas corresponding to the first area is arranged on the displayed camera moving image based on the captured moving image; and determining that at least a part of the body of the user is included in the second area.

(Configuration 10) In any one of Configurations 1 to 9, at least a part of the body of the respective user may be a face of the respective user.

(Configuration 11) In any one of Configurations 1 to 10, the preparation process may include, when the face of the respective user is not included in at least one second area among the plurality of second areas, displaying a pointer indicating a position of the face of the respective user.

(Configuration 12) In any one of Configurations 1 to 11, the preparation process may include, when the face of the respective user is included in any second area among the plurality of second areas, displaying the pointer in a display mode different from a display mode when the face of the respective user is not included in at least one second area among the plurality of second areas.

(Configuration 13) In any one of Configurations 1 to 12, the game operations may include determining a vertical position of a moving image of the respective user in an image displayed after the preparation process based on a vertical position of the respective user in a first area corresponding to the respective user among the plurality of first areas determined in the preparation process.

(Configuration 14) In any one of Configurations 1 to 13, the game operations may include determining a vertical position of each of the plurality of partial moving images in an image displayed after the preparation process based on a vertical position of the respective user in a first area corresponding to the respective user among the plurality of first areas determined in the preparation process.

(Configuration 15) According to an embodiment, a method executed by a computer is provided. The computer acquires a captured moving image based on a camera moving image captured by a camera, with respect to a plurality of first areas arranged side by side in an image of the captured moving image, executes one or more games, each of which changes game states of a plurality of players respectively corresponding to the plurality of first areas, based on at least a part of a body of a respective user included in each of the plurality of first areas, and executes a preparation process before execution of the one or more games. The preparation process includes: displaying a preparation image in which a plurality of guide images respectively indicating a plurality of second areas arranged side by side and respectively corresponding to the plurality of first areas are arranged on a displayed camera moving image based on the captured moving image; and determining that at least a part of the body of the respective user is included in each of the plurality of second areas.

(Configuration 16) A system capable of executing a game program according to an embodiment acquires a captured moving image based on a camera moving image captured by a camera, with respect to a plurality of first areas arranged side by side in an image of the captured moving image, executes one or more games, each of which changes game states of a plurality of players respectively corresponding to the plurality of first areas, based on at least a part of a body of a respective user included in each of the plurality of first areas, and executes a preparation process before execution of the one or more games. The preparation process includes: displaying a preparation image in which a plurality of guide images respectively indicating a plurality of second areas arranged side by side and respectively corresponding to the plurality of first areas are arranged on a displayed camera moving image based on the captured moving image; and determining that at least a part of the body of the respective user is included in each of the plurality of second areas.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

FIG. 1 shows an exemplary illustrative non-limiting schematic diagram illustrating an application example of a game apparatus according to this embodiment.
FIG. 2 shows an exemplary illustrative non-limiting schematic diagram illustrating a hardware configuration example of the game apparatus according to this embodiment.
FIG. 3 shows an exemplary illustrative non-limiting flowchart illustrating an overall process example executed by the game apparatus according to this embodiment.
FIGS. 4A to 4C show exemplary illustrative non-limiting diagrams for explaining an example of a preparation process of the game apparatus according to this embodiment.
FIGS. 5A to 5C show exemplary illustrative non-limiting schematic diagrams each illustrating an example of a preparation image 160 displayed in the preparation process of the game apparatus according to this embodiment.
FIG. 6 shows an exemplary illustrative non-limiting flowchart illustrating a processing procedure example of the preparation process in Step S2 shown in FIG. 3.
FIGS. 7A and 7B show exemplary illustrative non-limiting diagrams for explaining a process example in Step S38 shown in FIG. 6.
FIG. 8 shows an exemplary illustrative non-limiting diagram for explaining a process of changing a correspondence between a first area 154 and a player.
FIGS. 9A and 9B show exemplary illustrative non-limiting schematic diagrams each illustrating another example of the preparation image 160 displayed in the preparation process of the game apparatus according to this embodiment.
FIGS. 10A to 10C show exemplary illustrative non-limiting diagrams for explaining a partial moving image adjustment process of the game apparatus according to this embodiment.
FIG. 11 shows an exemplary illustrative non-limiting schematic diagram illustrating an example of adjusting a position for cutting out a partial moving image from a captured moving image.
FIGS. 12A and 12B show exemplary illustrative non-limiting diagrams for explaining a specific pre-game preparation image displayed in the specific pre-game preparation process.
FIGS. 13A to 13C show exemplary illustrative non-limiting schematic diagrams each illustrating an example of a specific pre-game preparation image 170 displayed in the specific pre-game preparation process of the game apparatus according to this embodiment.
FIG. 14 shows an exemplary illustrative non-limiting flowchart illustrating a processing procedure example of the specific pre-game preparation process in Step S5 shown in FIG. 3.
FIGS. 15A and 15B show exemplary illustrative non-limiting schematic diagrams each illustrating an example of a game process executed by the game apparatus according to this embodiment.
FIG. 16 shows an exemplary illustrative non-limiting schematic diagram illustrating another example of the game process executed by the game apparatus according to this embodiment.

### DETAILED DESCRIPTION

This embodiment will be described in detail with reference to the drawings. Note that the same or corresponding parts in the drawings are denoted by the same reference signs and description of the same or corresponding parts will not be repeated.

In this specification, even when data is described using the same term, contents of the data do not necessarily need to coincide completely. If at least one data and another data both convey specific information, the one data and the another data may be considered as the same data. Also, a name given to data is for convenience and does not limit a range or a technical meaning shown by the data.

In this specification, a program that causes a computer to execute a process may be a single program or a program group including a plurality of programs. In this specification, "program" does not necessarily mean a single program and may include a program group. Also, "program" does not need to be entirely stored in a single apparatus. "Program" may mean, for example, the entirety of a plurality of programs respectively stored in a plurality of apparatuses included in a computer.

In this specification, "computer" does not necessarily mean a single apparatus and may include an entirety in which a plurality of apparatuses are connected by wire or wireless. When an information processing apparatus is configured with a plurality of apparatuses, the entirety of the plurality of apparatuses may be an example of the information processing apparatus, and each of the plurality of apparatuses may be an example of the information processing apparatus.

In this specification, "system" does not necessarily mean a set of a plurality of information processing apparatuses and may include a single information processing apparatus. A single information processing apparatus may be a "system", and an entirety of a plurality of information processing apparatuses may be a "system".

### [A. Application Example]

A game apparatus 100 which is an example of an information processing apparatus will be described. Game apparatus 100 is also an example of a computer. The information processing apparatus is not limited to game apparatus 100 and may be, for example, a personal computer, a television, a tablet terminal, a smartphone, a wearable terminal, a server, and the like.

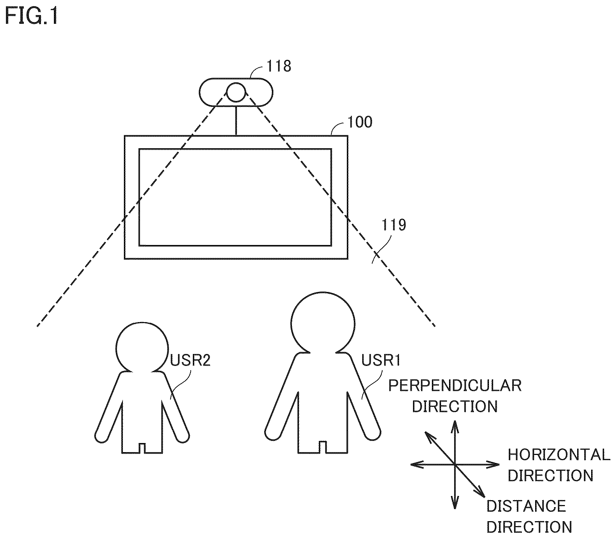

FIG. 1 is a schematic diagram showing an application example of game apparatus 100 according to this embodiment. Referring to FIG. 1, game apparatus 100 can utilize camera 118. For example, game apparatus 100 executes various processes using camera data captured by camera 118. The camera data is, for example, moving image data captured at a specified frame rate. Moving image data can also be said to be a set of still image data. Hereinafter, the moving image data captured by camera 118 is also referred to as "camera moving image". A camera moving image can also be rephrased as an image captured by camera 118 in real-time.

Camera 118 generates a camera moving image in which a subject within an imaging range 119 is captured according to a command from game apparatus 100 or according to a specified condition. Camera 118 includes an image sensor such as a CCD (Charge-Coupled Device) image sensor or a CMOS (Complementary Metal Oxide Semiconductor) image sensor, or the like. A lens may be arranged in a stage preceding the image sensor.

Game apparatus 100 may be connected to camera 118 by wire or may be connected to camera 118 by wireless. Camera 118 may exist outside game apparatus 100 or may be a part of game apparatus 100. A plurality of cameras 118 may be connectable to game apparatus 100. Camera 118 may be attached to game apparatus 100 so as to include a user facing game apparatus 100 in imaging range 119 as shown in FIG. 1, for example. Alternatively, camera 118 may be connected to game apparatus 100 via a cable, and a position and an orientation of camera 118 may be adjusted so as to include a user facing a display 120, which is separate from game apparatus 100 and to which an image is output from game apparatus 100, in imaging range 119.

Camera 118 may be, for example, a camera for video calls. Camera 118 may be a dedicated camera connectable only to a specific device or may be a general-purpose camera connectable to any device. Also, game apparatus 100 may utilize a camera of another information processing apparatus (for example, a smartphone). In this way, a configuration in which game apparatus 100 utilizes camera 118 is not limited. Game apparatus 100 may acquire a camera moving image captured by camera 118 by any method.

In the example shown in FIG. 1, if two users USR1 and USR2 exist within imaging range 119 of camera 118, camera 118 generates a camera moving image including the two users as subjects. Game apparatus 100 can execute processes as described later using a camera moving image including one or more users as subjects. Note that the number of users that can be included in a camera moving image processed by game apparatus 100 is not limited. Also, the number of users who play a game together using game apparatus 100 is not limited.

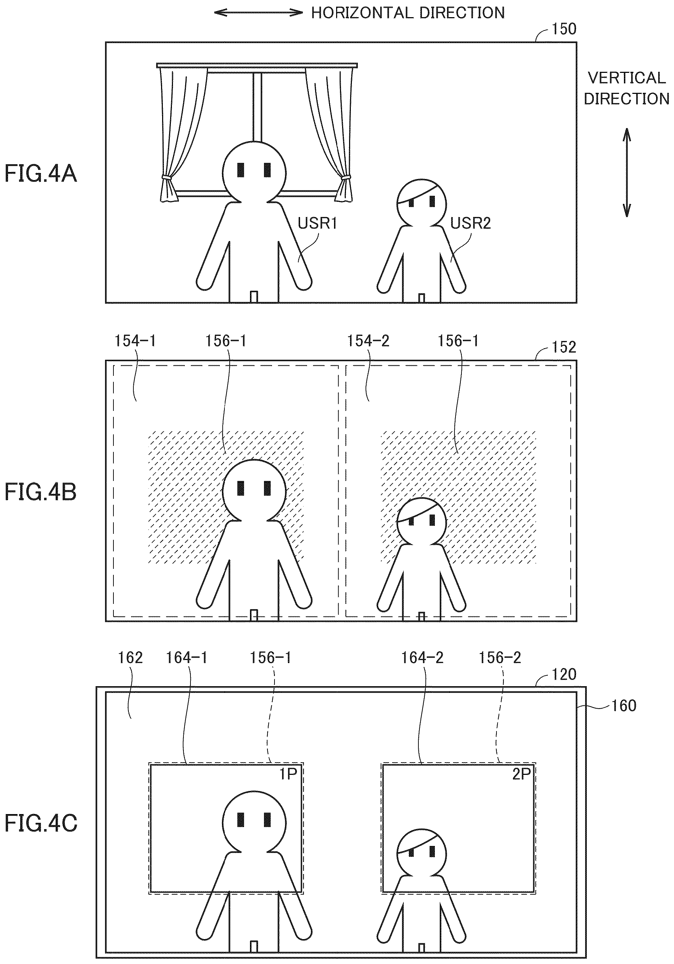

Each frame included in a camera moving image or a moving image based on a camera moving image shows a rectangular image. In this specification, terms of "vertical direction" and "horizontal direction" (or "vertical" and "horizontal") may be used with reference to an image (for example, refer to FIG. 4A described later). "Vertical direction" can be rephrased as "up-down direction", and "horizontal direction" can be rephrased as "left-right direction".

In this specification, expressions of "horizontal direction", "perpendicular direction", and "distance direction" may be used regarding a position or movement in imaging range 119 of camera 118. The horizontal direction of imaging range 119 is a direction corresponding to a horizontal direction in an image of a camera moving image captured by camera 118, and the perpendicular direction of imaging range 119 is a direction parallel to a vertical direction in an image of a camera moving image captured by camera 118. The distance direction of imaging range 119 is a direction parallel to an optical axis of camera 118.

Game apparatus 100 may be capable of communicating with one or more controllers. In this case, a user can give various commands to game apparatus 100 by operating a controller. Game apparatus 100 may be connected to one or more controllers by wire or may be connected to one or more controllers by wireless. When a plurality of controllers are connected to game apparatus 100, the plurality of controllers may be of the same model or may be of different models. Some controllers may be connected to game apparatus 100 by wire, and other controllers may be connected to game apparatus 100 by wireless.

### [B. Hardware Configuration Example]

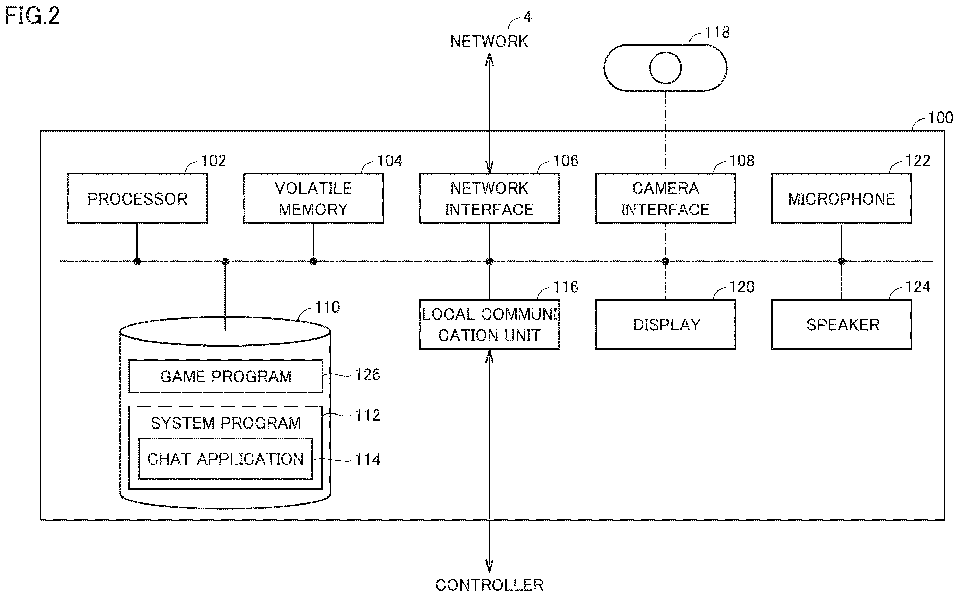

FIG. 2 is a schematic diagram showing a hardware configuration example of game apparatus 100 according to this embodiment. Referring to FIG. 2, game apparatus 100 includes, for example, one or more processors 102, one or more volatile memories 104, a network interface 106, a camera interface 108, one or more non-volatile memories 110, a local communication unit 116, display 120, a microphone 122, and a speaker 124. Each component may be detachable from a main body of game apparatus 100.

Processor 102 is a processing entity for executing processes in game apparatus 100. Processor 102 includes, for example, a CPU (Central Processing Unit) and a GPU (Graphics Processing Unit). Processor 102 expands a program stored in non-volatile memory 110 into volatile memory 104 and executes the program.

Volatile memory 104 is a volatile storage medium accessible by processor 102 and includes, for example, a DRAM (Dynamic Random Access Memory), an SRAM (Static Random Access Memory), and the like.

Non-volatile memory 110 is a non-volatile storage medium accessible by processor 102 and includes, for example, a flash memory, a hard disk, and the like. Non-volatile memory 110 may include a storage medium detachable from game apparatus 100 such as a cartridge or an optical disk, or the like. Non-volatile memory 110 is also referred to as storage.

Non-volatile memory 110 stores, for example, one or more programs such as a system program 112 and a game program 126.

System program 112 includes computer-readable instructions for hardware control of game apparatus 100, provision of a program execution environment, and the like. System program 112 may include one or more programs or program modules. For example, system program 112 may include a chat application 114.

Chat application 114 executes a process related to transmission and reception of communication data 10 among a plurality of game apparatuses 100 corresponding to a plurality of accounts belonging to a chat group.

Game program 126 includes computer-readable instructions for executing a game process. A plurality of game programs 126 may be installed in game apparatus 100. Game program 126 may be read from a separate storage medium. At least a part of game execution by game program 126 may utilize another game apparatus 100 or may utilize external resources such as a server, and the like. System program 112 may include at least a part of game program 126.

In this specification, "processor" can include at least a processing circuit that executes processes according to computer-readable instructions such as a CPU, a GPU, and the like, and a hard-wired circuit such as an ASIC (Application Specific Integrated Circuit), an FPGA (Field Programmable Gate Array), and the like. In this specification, "memory" may include at least volatile memory 104 and non-volatile memory 110, and may include other storage media and storage devices.

In game apparatus 100, an SoC (System on Chip) in which functions of a processor, a memory, and the like are integrated may be adopted. In this case, the processor and the memory exist in the same SoC (integrated circuit). Therefore, in this specification, "processor" and "memory" can include at least both a configuration in which the processor and the memory are independent from each other and a configuration in which the processor and the memory are integrated with each other.

Network interface 106 performs data communication with another game apparatus 100, a management server 300, a relay server 350, and the like via network 4. Network interface 106 may perform data communication with another game apparatus 100 and the like via the Internet which is an example of network 4. Network 4 may be a wireless network compliant with Bluetooth^{®}, ZigBee^{®}, a wireless LAN (IEEE 802.11 standard), and the like.

Camera interface 108 mediates data transmission to camera 118 and data reception from camera 118. Camera interface 108 may be connected to camera 118 by wire or may be connected to camera 118 by wireless.

Local communication unit 116 mediates data communication with one or more controllers. Local communication unit 116 receives data according to input to one or more controllers and transmits commands to one or more controllers. Local communication unit 116 may mediate data communication with another one or more game apparatuses 100. Local communication unit 116 may utilize wireless communication compliant with Bluetooth^{®}, ZigBee^{®}, a wireless LAN (IEEE 802.11 standard), and the like.

Display 120 displays an image or a video generated by a process by processor 102. Display 120 includes, for example, an LCD (Liquid Crystal Display), an organic EL display, and the like. Display 120 may exist outside game apparatus 100. In this case, game apparatus 100 may include an interface circuit for display 120.

Microphone 122 is arranged, for example, in a housing and the like of game apparatus 100 and collects sound to generate a sound signal. Speaker 124 is arranged, for example, in a housing and the like of game apparatus 100 and generates sound from a sound signal. At least one of microphone 122 and speaker 124 may exist outside game apparatus 100.

### [C. Overall Process Example]

Next, an overall process example executed in game apparatus 100 according to this embodiment will be described. Game apparatus 100 according to this embodiment can execute one or more games. Game apparatus 100 can utilize a camera moving image during execution of one or more games.

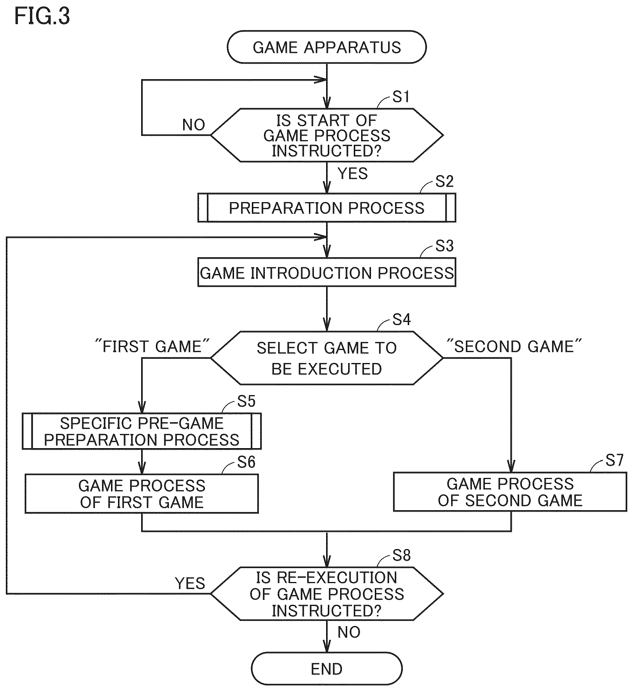

FIG. 3 is a flowchart showing an overall process example executed by game apparatus 100 according to this embodiment. Each step shown in FIG. 3 may be realized by one or more processors 102 executing at least one of system program 112 or game program 126.

The processes described in this embodiment may include other processes or may not include some processes. Also, an execution order of each process is an example, and for example, a plurality of processes may be executed in parallel, or some processes may be executed in an order opposite to the description. For convenience of description, processes are divided into steps, but these units of division are arbitrary, and a plurality of steps may be integrated, or one step may be divided into a plurality of steps. The same applies to the following description.

Referring to FIG. 3, when the start of a game process is instructed (YES in Step S1), game apparatus 100 executes a preparation process (Step S2). Game apparatus 100 executes the preparation process before execution of one or more games. In the preparation process, game apparatus 100 supports position adjustment and the like of a user necessary for a game process utilizing a camera moving image.

Subsequently, game apparatus 100 executes a game introduction process (Step S3) and selects a game to be executed (Step S4). Selection of the game to be executed may be randomly selected from among a plurality of games. Selection of the game to be executed may be based on a user operation or may not be based on a user operation.

When a first game is selected ("first game" in Step S4), game apparatus 100 executes a specific pre-game preparation process (Step S5). In the specific pre-game preparation process, game apparatus 100 acquires setting information and the like necessary for the first game utilizing a camera moving image. Then, game apparatus 100 executes a game process of the first game (Step S6).

In this way, game apparatus 100 may execute the specific pre-game preparation process after the preparation process and before at least one game among the one or more games is executed.

When a second game is selected ("second game" in Step S4), game apparatus 100 executes a game process of the second game (Step S7). For example, the second game can execute a game process utilizing a camera moving image based on setting information acquired in the preparation process.

When re-execution of the game process is instructed (YES in Step S8), processes from Step S3 onward are repeated. Note that if the specific pre-game preparation process in Step S5 has been executed once, re-execution of the specific pre-game preparation process may be omitted. Also, when re-execution of the game process is instructed (YES in Step S8), processes from Step S2 onward may be repeated.

If re-execution of the game process is not instructed (NO in Step S8), the process ends. The process in Step S8 may be a process of determining whether or not end of the game process is instructed.

For convenience of description, an example in which the first game and the second game exist as options is shown, but the number of types of games is not limited. Also, presence or absence of the specific pre-game preparation process and contents of the specific pre-game preparation process may be different for each game.

### [D. Preparation Process]

The preparation process in Step S2 shown in FIG. 3 includes, for example, a process for supporting each user participating in a game so that each user can adjust a position in a horizontal direction of imaging range 119. For example, in the preparation process, a user mainly moves in the horizontal direction so that a subsequent game process can be appropriately executed. By horizontal movement of the user, a position of an image of the user in a horizontal direction of a camera moving image changes. The preparation process may include a process for supporting position adjustment along a horizontal direction of each user in an image.

FIGS. 4A to 4C are diagrams for explaining an example of the preparation process of game apparatus 100 according to this embodiment. As an example, a case in which two users USR1 and USR2 play a game together is assumed. Game apparatus 100 acquires a captured moving image 152 based on a camera moving image 150 captured by camera 118.

For example, camera moving image 150 shown in FIG. 4A includes two users USR1 and USR2 as subjects. Captured moving image 152 is a moving image based on camera moving image 150. Captured moving image 152 may be the same as camera moving image 150 or may be a moving image obtained by performing image processing on camera moving image 150. Captured moving image 152 shown in FIG. 4B is a moving image in which subjects other than persons included in camera moving image 150 are masked so that only persons are cut out. Captured moving image 152 shown in FIG. 4B can also be said to be a moving image cut out with outlines of persons included in camera moving image 150. In this case, a background around the persons included in camera moving image 150 may be set to white or a transparent color, or may be set to a specified color or pattern.

Processor 102 of game apparatus 100 may generate captured moving image 152, at least one of camera 118 or camera interface 108 may generate captured moving image 152, or another game apparatus 100, an external server and the like may generate captured moving image 152. A method by which game apparatus 100 acquires captured moving image 152 is not limited.

In this embodiment, one or more first areas 154 are set in an image of captured moving image 152. In the following description, when it is necessary to specify each of a plurality of first areas 154, each of the plurality of first areas 154 is distinguished by adding a branch number (for example, first areas 154-1 and 154-2 shown in FIGS. 4A to 4C).

When a plurality of first areas 154 are set in an image of captured moving image 152, the plurality of first areas 154 are arranged side by side. In this embodiment, the fact that a plurality of first areas 154 are arranged side by side may mean that a certain first area 154 is arranged at a position not overlapping with another first area 154 in a horizontal direction of captured moving image 152. A horizontal size of a certain first area 154 in captured moving image 152 may be the same as or different from that of another first area 154. Also, a vertical position and a vertical size of a certain first area 154 in captured moving image 152 may be the same as or different from those of another first area 154. Note that the same applies to a case where other plurality of areas are arranged side by side.

The number, position, shape, and the like of first areas 154 may be determined or changed according to contents of a game or the number of players participating in the game and the like. The shape of first area 154 is not limited to a quadrangle and may be a circle, an arbitrary polygon, a discontinuous shape, and the like. For convenience of description, FIG. 4B shows an example in which two first areas 154 are set, but for example, when four users play a game together on one game apparatus 100, four first areas 154 may be set.

Note that one first area 154 may be set in an image of captured moving image 152. In the following, a process example in a case where a plurality of first areas 154 are set will be mainly described, but a similar process may be executed in a case where one first area 154 is set.

Each first area 154 may be associated with a player participating in a game. In the example shown in FIG. 4B, for example, first area 154-1 is associated with a first player (hereinafter, also referred to as "1P"), and first area 154-2 is associated with a second player (hereinafter, also referred to as "2P"). Note that it is assumed that user USR1 selects 1P and user USR2 selects 2P.

In this specification, the term "player" can be rephrased as a user participating in a game. The term "player" can include an entity participating in a game and a role in the game. For example, "player" can include an object or a character operated by a user or a computer.

Game apparatus 100 executes a game process in which each player participates based on at least a part of an image processing result in first area 154 corresponding to each player. First area 154 can also be rephrased as an area of interest for each player in a game process. Details of the game process will be described later. A position and a size of first area 154 at a time of execution of the game process may be set based on a result of the preparation process. First area 154 does not need to be set at a time of execution of the preparation process. First area 154 shown in FIG. 4B may show first area 154 in a certain game process thereafter, for example.

In order to guide each user to a horizontal range of first area 154, a second area 156 corresponding to first area 154 may be set. In the following description, when it is necessary to specify each of a plurality of second areas 156, each of the plurality of second areas 156 is distinguished by adding a branch number (for example, second areas 156-1 and 156-2 shown in FIGS. 4A to 4C).

When a plurality of first areas 154 arranged side by side are set, a plurality of second areas 156 respectively corresponding to the plurality of first areas 154 are also arranged side by side. In the preparation process, game apparatus 100 determines that at least a part of a body of a user is included in each of the plurality of second areas 156. For example, with respect to each second area 156, game apparatus 100 determines whether or not a face of a user, an upper body below a neck of the user, and the like are included.

Game apparatus 100 may end the preparation process when a determination result of whether or not at least a part of the body of the user is included for each second area 156 satisfies a specified condition.

Second area 156 is set so as to be able to determine that at least a part of the body of each user is included in first area 154, for example. Second area 156 may be set near a center of first area 154, for example. A position, a shape, and the like of second area 156 may be determined or changed according to a shape of corresponding first area 154, the number of players participating in a game and the like. The shape of second area 156 is not limited to a quadrangle and may be a circle, an arbitrary polygon, a discontinuous shape, and the like.

Game apparatus 100 may display a preparation image 160 for guiding a user to a range corresponding to second area 156. For example, game apparatus 100 may display preparation image 160 as shown in FIG. 4C on display 120.

Preparation image 160 includes a displayed camera moving image 162 based on captured moving image 152. Displayed camera moving image 162 may be the same as captured moving image 152 or may be an image obtained by performing image processing on captured moving image 152.

Preparation image 160 may be an image in which a guide image 164 indicating second area 156 is arranged on displayed camera moving image 162. In the following description, when it is necessary to specify each of a plurality of guide images 164, each of the plurality of guide images 164 is distinguished by adding a branch number (for example, guide images 164-1 and 164-2 shown in FIGS. 4A to 4C).

For example, guide image 164-1 indicates second area 156-1, and guide image 164-2 indicates second area 156-2. Guide image 164 may have any display mode, shape, and the like as long as guide image 164 indicates second area 156. Note that in this embodiment, second area 156 itself is not displayed. Second area 156 in preparation image 160 shown by a dashed line in FIG. 4C is for reference and is not actually displayed. Note that second area 156 may be displayed. The same applies to first area 154.

As shown in FIG. 4C, guide image 164 may be a frame indicating a range. The frame indicated by guide image 164 may be the same as an outer boundary of second area 156, or may be outside or inside the outer boundary of second area 156. For example, at least a part of the frame indicated by guide image 164 only needs to overlap with second area 156.

The shape of the frame indicated by guide image 164 is not limited to a quadrangle and may be a circle, an arbitrary polygon, a discontinuous shape, and the like. The shape of the frame indicated by guide image 164 may be a shape according to a shape of corresponding second area 156.

The frame indicated by guide image 164 may indicate an outline of a face or may indicate an outline of a body. Also, guide image 164 may be an object such as an arrow and the like. In this case, a user may move a face or a body of the user near a position indicated by the arrow of guide image 164.

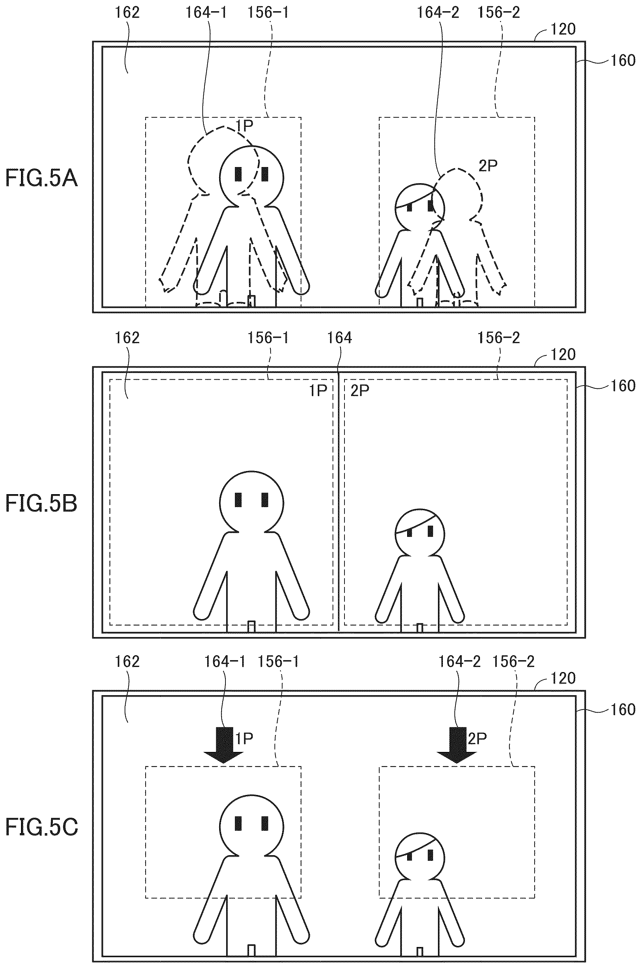

FIGS. 5A to 5C are schematic diagrams each showing an example of preparation image 160 displayed in the preparation process of game apparatus 100 according to this embodiment. As shown in FIG. 5A, guide image 164 may be a frame roughly indicating an outline of a body. As shown in FIG. 5B, guide image 164 may be a partition line indicating a boundary between second area 156-1 and second area 156-2. As shown in FIG. 5C, guide image 164 may be an arrow indicating a position where second area 156 is set.

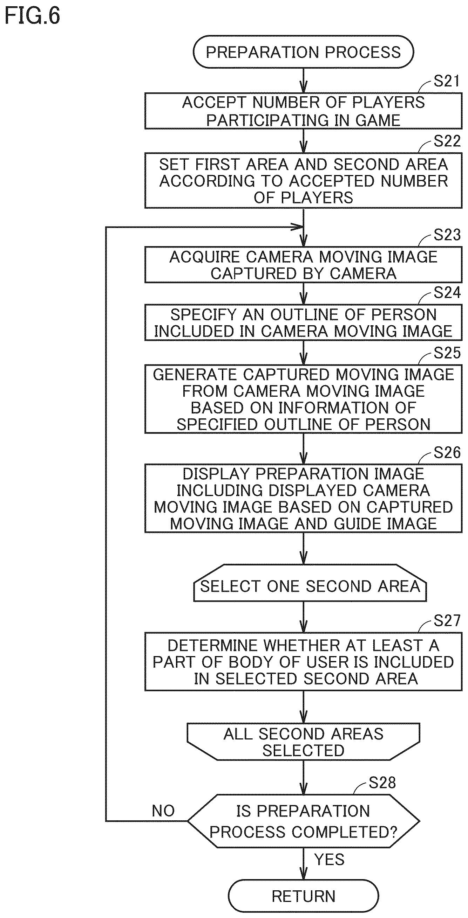

FIG. 6 is a flowchart showing a processing procedure example of the preparation process in Step S2 shown in FIG. 3. Referring to FIG. 6, game apparatus 100 accepts the number of players participating in a game (Step S21). Game apparatus 100 sets one or more first areas 154 and one or more second areas 156 according to the accepted number of players (Step S22). Note that the process of setting in Step S22 may be a process of reading out a setting according to the number of players from a plurality of settings prepared in advance, or may be a process of determining the number, position, and range of first areas 154 and second areas 156 each time according to the number of players.

Game apparatus 100 acquires camera moving image 150 captured by camera 118 (Step S23) and specifies an outline of a person included in the acquired camera moving image 150 (Step S24). Then, game apparatus 100 generates captured moving image 152 from camera moving image 150 based on information of the specified outline of the person (Step S25). Game apparatus 100 displays preparation image 160 including displayed camera moving image 162 based on captured moving image 152 and guide image 164 (Step S26).

Regarding each second area 156, game apparatus 100 determines whether or not at least a part of the body of the user is included in second area 156 (Step S27). The process in Step S27 may be a process using a processing result of Step S24, or it may be determined whether or not an outline of a person can be specified in each second area 156.

Game apparatus 100 determines whether or not the preparation process is completed based on a determination result of whether or not at least a part of the body of the user is included for each second area 156 (Step S28). If it is not determined that the preparation process is completed (NO in Step S28), processes from Step S23 onward are repeated.

If it is determined that the preparation process is completed (YES in Step S28), the process proceeds to Step S3 in FIG. 3.

The processes in Steps S23 to S28 described above may be repeatedly executed at specified intervals (for example, at processing frame intervals executed every 1/60 second) as an example.

As a process example of determining whether or not the preparation process is completed (Step S28 shown in FIG. 6), if a state in which at least a part of the body of the respective user is included in all of second areas 156 continues for more than a first period of time, it may be determined that the preparation process is completed.

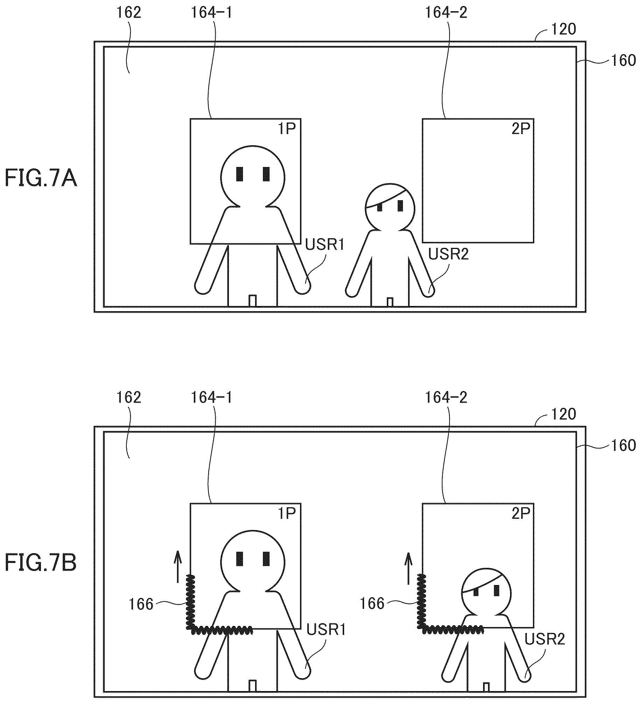

FIGS. 7A and 7B are diagrams for explaining a process example in Step S28 shown in FIG. 6. In preparation image 160 shown in FIG. 7A, guide image 164-1 indicating second area 156-1 and guide image 164-2 indicating second area 156-2 are displayed on displayed camera moving image 162. User USR1 exists within second area 156-1, but user USR2 exists outside second area 156-2. That is, FIG. 7A shows a state in which at least a part of the body of a user is included only in second area 156-1.

FIG. 7B shows a state in which user USR2 has moved into second area 156-2. In this state, at least a part of the body of the respective user is included in all of second areas 156 (in this example, second area 156-1 and second area 156-2). When at least a part of the body of respective user is included in all of second areas 156, game apparatus 100 may display guide image 164 in a display mode different from a display mode in other cases in order to inform a user of the state.

By making the display mode of guide image 164 different, for example, each user can grasp that at least a part of the body of respective user is included in all of second areas 156 and that a current state should be maintained.

For example, as shown in FIG. 7B, while the above state continues, an object 166 for decorating a frame may be displayed to sequentially extend along each of the frames indicated by guide images 164-1 and 164-2. At this time, a length of object 166 indicates a duration of the state in which at least a part of the body of respective user is included in all of second areas 156. Therefore, by displaying object 166 so as to go around the frame in the first period of time, a user can easily predict a time until the preparation process is completed from the length of object 166. Also, a user can easily grasp that the preparation process is not completed by visually recognizing that object 166 does not go around the frame or that object 166 disappears in the middle.

As a display mode of the state in which at least a part of the body of respective user is included in all of second areas 156, various display modes may be adopted without being limited to object 166 shown in FIG. 7B. For example, a message indicating the state may be displayed, or a shape of a frame indicated by guide image 164, a color of a frame, a thickness of a frame, a change pattern of a shape of a frame, a blinking pattern of a frame, and the like may be made different according to the state.

Note that the first period of time may be a value determined in advance, or may be determined each time according to the number of players, the number of second areas 156, a size of second area 156, and the like.

If a horizontal position of each user is individually determined first, inconvenience may occur in a case where re-adjustment is desired due to positional relationship with other users and the like. Therefore, adjustment following intentions of all users can be realized by all users scheduled to participate in a game agreeing on positioning and then confirming by continuing the state for a specified period of time.

Game apparatus 100 may not be able to acquire in advance which side in imaging range 119 of camera 118 a user corresponding to each player is located. Therefore, game apparatus 100 may be able to change a correspondence between first area 154 and a player according to a user operation and the like.

For example, in the example shown in FIG. 4B, first area 154-1 set on a left side of captured moving image 152 is associated with 1P, and first area 154-2 set on a right side of captured moving image 152 is associated with 2P. In this state, game apparatus 100 may associate first area 154-1 with 2P and associate first area 154-2 with 1P.

By changing a correspondence between first area 154 and a player according to a user operation, a user can change a corresponding player without changing a current position. Alternatively, a corresponding player can be determined according to a position of a user.

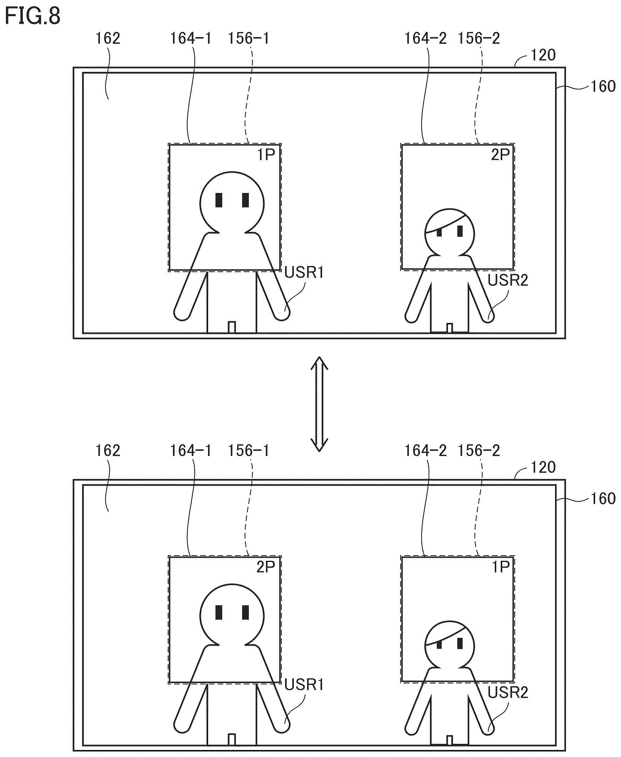

According to such a change in a correspondence, display contents of preparation image 160 may also be changed. FIG. 8 is a diagram for explaining a process of changing a correspondence between first area 154 and a player. In a state on an upper side of FIG. 8, second area 156-1 set in association with first area 154-1 and guide image 164-1 indicating second area 156-1 are associated with 1P. Also, second area 156-2 set in association with first area 154-2 and guide image 164-2 indicating second area 156-2 are associated with 2P.

For example, when any user performs a specified operation using a controller, a state may change to a state on a lower side of FIG. 8. In the state on the lower side of FIG. 8, second area 156-1 and guide image 164-1 are associated with 2P, and second area 156-2 and guide image 164-2 are associated with 1P.

Note that the state on the upper side and the state on the lower side shown in FIG. 8 may be switchable with each other. As an implementation example, at least a part of the body of the user detected for determining that the preparation process is completed may be a face of the user. That is, a condition for completing the preparation process may be that faces of respective users are included in second area 156-1 indicated by guide image 164-1 and second area 156-2 indicated by guide image 164-2. In this case, any face recognition algorithm may be used to determine whether or not a face of a user is included in second area 156.

Note that a condition for completing the preparation process may be that an entire face of a user is included in second area 156, or a condition for completing the preparation process may be that a part of a face of a user is included in second area 156. In the latter case, for example, a condition for completing the preparation process may be that a specified ratio of an area of a detected face of a user is included in second area 156.

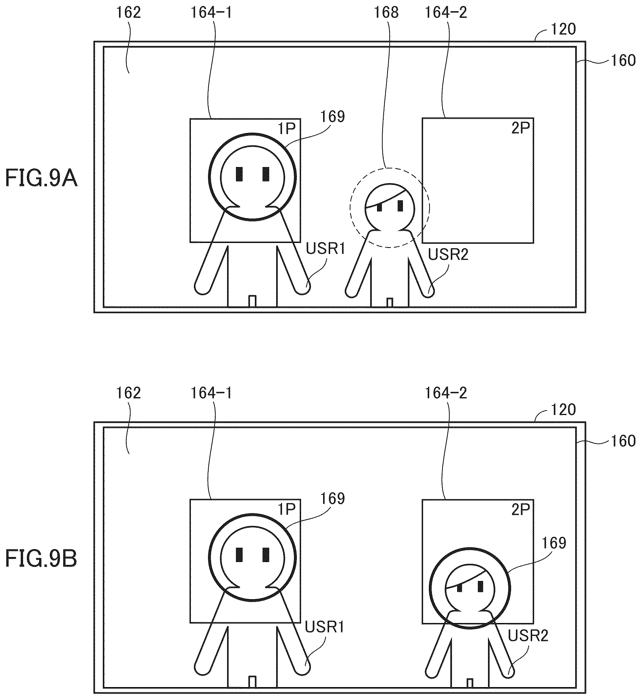

In this case, a detection result of a face of a user may be included in preparation image 160. FIGS. 9A and 9B are schematic diagrams each showing another example of preparation image 160 displayed in the preparation process of game apparatus 100 according to this embodiment.

At least a part of the body of the user detected for determining that the preparation process is completed is not limited, and may be a whole body of a user, an upper body of a user, or a part of a specified ratio of a whole body or an upper body of a user.

In preparation image 160 shown in FIGS. 9A and 9B, a pointer indicating a position of a face of a user is arranged on displayed camera moving image 162.

In the example shown in FIG. 9A, user USR2 exists outside second area 156-2, and a face of user USR2 is also detected outside second area 156-2. In this case, an out-of-area pointer 168 is displayed around the face of user USR2. Out-of-area pointer 168 indicates that a detected face is not included in second area 156. In this way, when a face of a user is not included in at least one of second areas 156, out-of-area pointer 168 indicating a position of a face of a user may be displayed.

By displaying out-of-area pointer 168 indicating a position of a face of a user, a user can understand that a face of the user is detected, and thus can grasp that the user only needs to move a face of the user to an appropriate position.

On the other hand, user USR1 exists within second area 156-1, and a face of user USR1 is also detected within second area 156-1. In this case, an in-area pointer 169 is displayed around the face of user USR1. In-area pointer 169 has a display mode different from that of out-of-area pointer 168, and indicates that a detected face is included in second area 156. In this way, when a face of a user is included in any of second areas 156, in-area pointer 169 may be displayed in a display mode different from a display mode when a face of a user is not included in the second area 156.

By displaying in-area pointer 169, a user can grasp that a current state should be maintained.

FIG. 9B shows a state in which user USR2 has moved into second area 156-2. In this state, a pointer displayed around the face of user USR2 is updated from out-of-area pointer 168 to in-area pointer 169. By displaying in-area pointer 169, user USR2 can easily grasp that user USR2 exists within second area 156.

In FIGS. 9A and 9B, an example in which out-of-area pointer 168 and in-area pointer 169 are displayed has been described, but if at least out-of-area pointer 168 is displayed, a user can easily grasp in which direction the user should move. In this case, in-area pointer 169 does not need to be displayed. Instead of in-area pointer 169 not being displayed, when a face is detected within second area 156, a display mode of corresponding guide image 164 may be made different. Note that in-area pointer 169 may be displayed while out-of-area pointer 168 does not need to be displayed.

As an implementation example, a partial moving image 192 is cut out from captured moving image 152 in association with each first area 154 included in captured moving image 152. Partial moving image 192 is displayed in a process after the preparation process as an example. Although details will be described later, partial moving image 192 is displayed, for example, at a time of execution of at least one of a game introduction process, a specific pre-game preparation process, or a game process. A display position of each partial moving image 192 may be adjusted based on a result of the preparation process. A cutout position of each partial moving image 192 may be adjusted based on a result of the preparation process. Partial moving image 192 may include an entirety of a range of captured moving image 152.

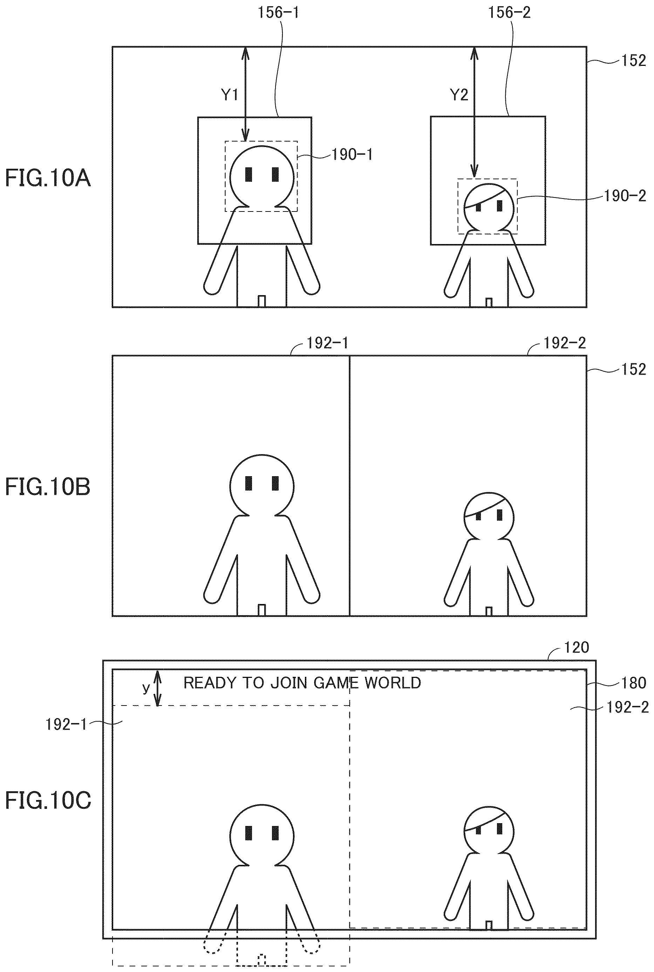

FIGS. 10A to 10C are diagrams for explaining a partial moving image adjustment process of game apparatus 100 according to this embodiment. Referring to FIG. 10A, it is assumed that game apparatus 100 has detected a face of a user included in captured moving image 152 in the preparation process. And, for example, it is assumed that face areas 190-1 and 190-2 respectively indicating ranges of faces of two users are detected. For example, as shown in FIG. 10A, game apparatus 100 may calculate a distance Y1 from an upper end of captured moving image 152 to an upper end of face area 190-1 and a distance Y2 from the upper end of captured moving image 152 to an upper end of face area 190-2. Note that game apparatus 100 is not limited to a face of a user and may detect, for example, an upper body or legs.

FIG. 10B is an example of partial moving image 192 cut out from captured moving image 152. In partial moving image 192, a background of a user is masked, and an in-game background or an object may be displayed around the user. In the example shown in FIG. 10B, a left side from a center in a left-right direction of captured moving image 152 is cut out as partial moving image 192-1, and a right side is cut out as partial moving image 192-2. Each partial moving image 192 may coincide with each first area 154 or may be a part of each first area 154. Note that in this embodiment, a size of each partial moving image 192 and a position in an up-down direction in captured moving image 152 are the same.

FIG. 10C is a schematic diagram showing a game introduction image 180, which is an example of an image displayed at a time of execution of the game introduction process in Step S3 shown in FIG. 3. The game introduction process is a process inserted after the preparation process and before start of at least one game. In the game introduction process, for example, contents of a game to be started or contents of a plurality of game candidates that can be started may be explained. Also, for example, a user can confirm whether or not the preparation process is correctly completed by seeing game introduction image 180 and can prepare to start a game.

In game introduction image 180, partial moving image 192-1 is displayed shifted downward by a distance y compared to partial moving image 192-2. Distance y is, for example, a difference between distance Y1 from the upper end of captured moving image 152 to the upper end of face area 190-1 and distance Y2 from the upper end of captured moving image 152 to the upper end of face area 190-2 at a time of the preparation process. Of partial moving image 192-1 shown in FIG. 10C, a portion lower than game introduction image 180 is not actually displayed. User experience is improved by adjusting up-down positions of display of partial moving images 192 in this way.

A method of calculating distance y is not limited. Distance y may be calculated, for example, by multiplying a difference between distance Y1 and distance Y2 by a specified coefficient, or may be calculated based on a ratio between distance Y1 and distance Y2. Also, display positions of each partial moving image 192 may be respectively adjusted instead of only one partial moving image 192. For example, a shift amount y1 in the up-down direction of partial moving image 192-1 may be calculated based on distance Y1, and a shift amount y2 in the up-down direction of partial moving image 192-2 may be calculated based on distance Y2. Also, partial moving image 192 may be displayed shifted upward.

Note that a shift amount of a display position in the up-down direction may be different according to a process to be executed or may be different according to a type of a game to be executed. For example, a calculation method of a shift amount may be different according to a type of a game to be executed.

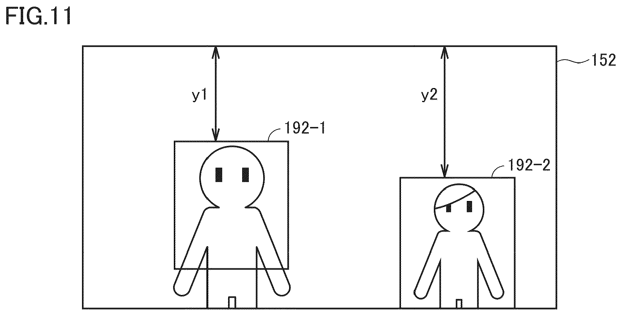

FIG. 11 is a schematic diagram showing an example of adjusting a position for cutting out partial moving image 192 from captured moving image 152. In the example shown in FIGS. 10A to 10C, up-down positions of each user to be displayed were adjusted by adjusting a display position of the cut-out partial moving image 192, for example, as shown in FIG. 10C. In the example shown in FIG. 11, up-down positions of each user when partial moving image 192 is displayed are adjusted by adjusting an up-down position where partial moving image 192 is cut out.

As shown in FIG. 11, partial moving images 192-1 and 192-2 are cut out from ranges having different distances from the upper end of captured moving image 152. As an example, a distance from the upper end of captured moving image 152 to an upper end of a cutout range of partial moving image 192-1 is y1, and a distance from the upper end of captured moving image 152 to an upper end of a cutout range of partial moving image 192-2 is y2. As an example, distance y1 is a value obtained by multiplying distance Y1 by a specified coefficient, and distance y2 is a value obtained by multiplying distance Y2 by a specified coefficient. Note that calculation methods of y1 and y2 are not limited, and for example, a ratio between distance y1 and distance y2 may be calculated based on a ratio between distance Y1 and distance Y2.

Partial moving images 192-1 and 192-2 cut out in this way are displayed at a time of execution of a subsequent process. For example, partial moving images 192-1 and 192-2 may be included in game introduction image 180. At this time, up-down positions of partial moving images 192-1 and 192-2 in game introduction image 180 may be the same. Even if up-down positions of partial moving images 192-1 and 192-2 are the same, up-down positions of each user to be displayed are adjusted by up-down cutout positions of partial moving images 192-1 and 192-2 from captured moving image 152 being different.

In this way, game apparatus 100 may determine a cutout position or a display position of each partial moving image 192 in an image at a time of execution of a subsequent process based on, for example, a position where a face of a user is detected in each of a plurality of first areas 154. For example, a vertical position of a moving image of each user in an image displayed after the preparation process is adjusted based on a vertical position of the user in each of a plurality of first areas detected in the preparation process.

### [E. Specific Pre-Game Preparation Process]

The specific pre-game preparation process in Step S5 shown in FIG. 3 includes, for example, a process for supporting each user participating in a game so that each user can adjust a position in a perpendicular direction of imaging range 119 or a distance between each user participating in the game and camera 118.

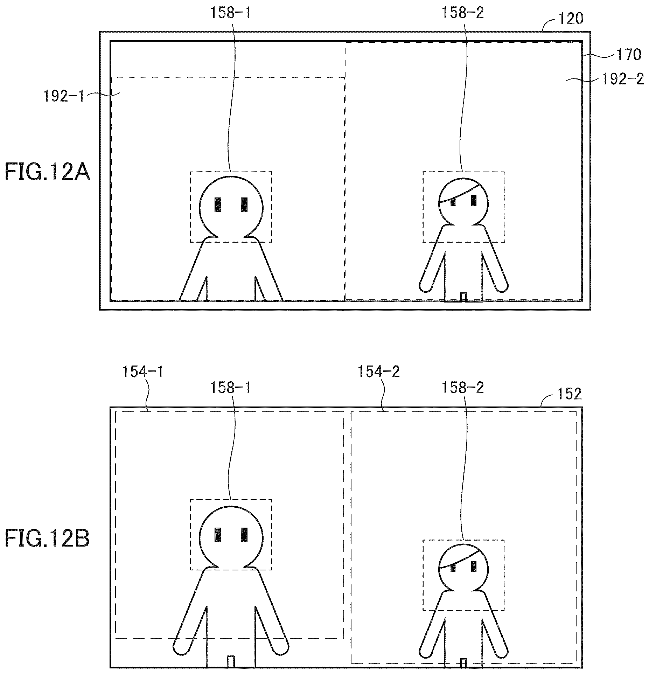

FIGS. 12A and 12B are diagrams for explaining a specific pre-game preparation image 170 displayed in the specific pre-game preparation process.

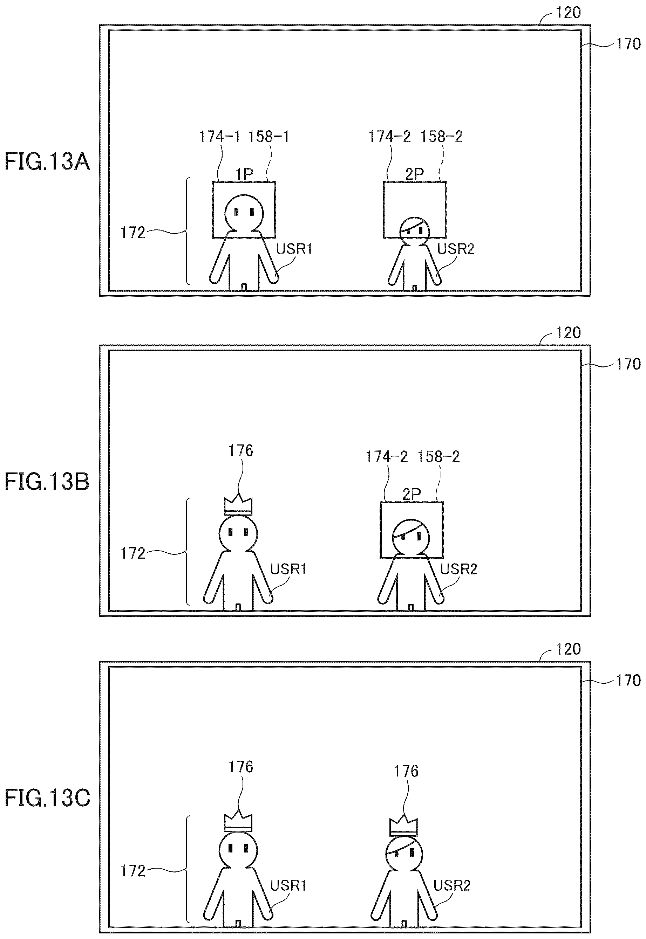

FIG. 12A is an example of specific pre-game preparation image 170. Specific pre-game preparation image 170 will be described in detail later using FIGS. 13A to 13C. In the specific pre-game preparation process, game apparatus 100 determines whether or not a face or a body (for example, an upper body below a neck) of each user is included in third area 158. In the following description, when it is necessary to specify each of a plurality of third areas 158, each of the plurality of third areas 158 is distinguished by adding a branch number (for example, third areas 158-1 and 158-2 shown in FIGS. 12A and 12B).

When a determination result for third area 158 satisfies a specified condition, game apparatus 100 ends the specific pre-game preparation process. As will be described later, a guide image 174 indicating third area 158 may be displayed. For example, similarly to second area 156, third area 158 is set so as to be able to determine that at least a part of the body of each user is included in first area 154. A position, a shape and the like of third area 158 may be determined or changed according to a shape of corresponding first area 154, the number of players participating in a game and the like. Note that third area 158 corresponding to first area 154 may be set in the same range as second area 156 corresponding to the same first area 154 or may be set in a different range.

As shown in FIG. 12A, up-down positions of partial moving images 192-1 and 192-2 in specific pre-game preparation image 170 are adjusted based on the preparation process. In the example shown in FIG. 12A, partial moving image 192-1 is displayed lower than partial moving image 192-2 regarding an up-down direction. On the other hand, up-down positions of third area 158-1 and third area 158-2 are the same. In this way, in the specific pre-game preparation process, by display positions of each partial moving image 192 being adjusted, a necessity for each user to stand up, crouch down, or approach or move away from camera 118, for example, in order to include a face in each third area 158 is suppressed, and user experience is improved. Note that each partial moving image 192 during a game executed after the specific pre-game preparation process may be displayed at up-down positions similar to up-down positions in specific pre-game preparation image 170.

FIG. 12B is a schematic diagram showing a relationship among captured moving image 152, first area 154, and second area 156 when specific pre-game preparation image 170 shown in FIG. 12A is displayed. As shown in FIG. 12A, partial moving image 192-1 is shifted downward with respect to partial moving image 192-2, and a lower portion of partial moving image 192-1 is not included in specific pre-game preparation image 170. In other words, of the body of user USR1 included in captured moving image 152, the lower portion is not used for specific pre-game preparation. Therefore, as shown in FIG. 12B, in captured moving image 152, first area 154-1 does not include the lower portion. On the other hand, first area 154-2 includes a range from an upper end to a lower end of captured moving image 152.

Note that in the example shown in FIGS. 12A and 12B, ranges indicated by first area 154 and partial moving image 192 were the same, but the ranges indicated by first area 154 and partial moving image 192 may be different. For example, first area 154 may include a wider range of captured moving image 152 than partial moving image 192. At this time, for example, when there is movement of a body of a user in a range of captured moving image 152 which is not displayed as partial moving image 192 but is included in first area 154, a game state may be changed. Also, when game apparatus 100 can execute a plurality of games, at least a vertical position or a vertical size of first area 154 in each of the plurality of games may be different from that in other games. Games executable by game apparatus 100 may include a plurality of games in each of which at least a vertical position or a vertical size of first area 154 is different.

FIGS. 13A to 13C are schematic diagrams showing an example of specific pre-game preparation image 170 displayed in the specific pre-game preparation process of game apparatus 100 according to this embodiment. For convenience of description, in an example of specific pre-game preparation image 170 shown in FIGS. 13A to 13C, it is assumed that adjustment of up-down positions of each partial moving image 192 is not performed. Alternatively, in the example of specific pre-game preparation image 170 shown in FIGS. 13A to 13C, it may be considered that adjustment of up-down positions of each partial moving image 192 was performed, but user USR2 is located lower in imaging range 119 than at a time of the preparation process because user USR2 is bending knees, for example.

Referring to FIG. 13A, specific pre-game preparation image 170 includes a displayed camera moving image 172 based on captured moving image 152. Specific pre-game preparation image 170 may include an object related to a selected game. Displayed camera moving image 172 may be a moving image in which an entire range or a part of a range of captured moving image 152 is cut out, or may be a moving image in which captured moving image 152 is cut out with an outline of a person corresponding to each player.

Specific pre-game preparation image 170 may be an image in which guide image 174 indicating third area 158 is arranged on displayed camera moving image 172. In the following description, when it is necessary to specify each of a plurality of guide images 174, each of the plurality of guide images 174 is distinguished by adding a branch number (for example, guide images 174-1 and 174-2 shown in FIGS. 13A to 13C).

For example, guide image 174-1 indicates third area 158-1, and guide image 174-2 indicates third area 158-2. Guide image 174 may have any display mode, shape, and the like as long as guide image 174 indicates third area 158. Variations of the display mode and shape of guide image 174 are similar to those of guide image 164 described above, and thus the same description will not be repeated.

When a plurality of first areas 154 arranged side by side are set, a plurality of third areas 158 respectively corresponding to the plurality of first areas 154 are also arranged side by side. In the specific pre-game preparation process, a plurality of first areas 154 may be set or changed for a selected game before execution.

For example, as shown in FIG. 13A, if a face of user USR1 (corresponding to 1P in this example) is included in third area 158-1, game apparatus 100 may determine that the specific pre-game preparation process of a player corresponding to third area 158-1 is completed. When it is determined that the specific pre-game preparation process of the player corresponding to third area 158-1 is completed, as shown in FIG. 13B, game apparatus 100 may display an object 176 displayed during a subsequent game in association with the player (1P in this example) instead of guide image 174-1 indicating third area 158-1. Note that even if it is determined that the specific pre-game preparation process of the player corresponding to third area 158-1 is completed, display of guide image 174 may be continued.

On the other hand, when user USR2 (corresponding to 2P in this example) sees specific pre-game preparation image 170 shown in FIG. 13A and grasps that a face of the user USR2 is not included in third area 158-2, user USR2 approaches camera 118, or stands up if sitting and the like. It is assumed that user USR2 has adjusted positioning, so that the face of user USR2 is included in third area 158-2 (for example, refer to FIG. 12B). When the face of user USR2 is included in third area 158-2, game apparatus 100 may determine that the specific pre-game preparation process of a player corresponding to third area 158-2 is completed. When it is determined that the specific pre-game preparation process of the player corresponding to third area 158-2 is completed, as shown in FIG. 13C, game apparatus 100 may display object 176 displayed during a subsequent game in association with the player instead of guide image 174-2 indicating third area 158-2.

Object 176 is the same object as an object displayed during execution of a selected game when the game is executed. By displaying object 176, a user can grasp at a glance that at least a part of the body of the user has been detected. Also, for example, a user can predict contents of a game to be started. Also, a user for whom object 176 is not displayed can easily grasp that at least a part of the body of the user is not detected. Note that object 176 may be an object different from an object displayed during execution of a game.

In the preparation process, since each user adjusts positioning in a horizontal direction of imaging range 119, it may be necessary to consider positioning of other users. On the other hand, in the specific pre-game preparation process, since it is considered that a user is already at an appropriate position regarding a horizontal direction, each user only needs to adjust positioning in a perpendicular direction of imaging range 119 or positioning in a distance direction of imaging range 119, and thus it is considered that a necessity to consider other users is low. Therefore, it may be determined whether or not the specific pre-game preparation process is completed for each third area 158. Note that regardless of presence or absence of the preparation process, it may be determined whether or not the specific pre-game preparation process is completed for each third area 158.

At least a part of the body of the user detected for determining completion of the specific pre-game preparation process may be a face of the user. In this case, as described with reference to FIGS. 9A and 9B and the like, a pointer indicating a position of a face of a user may be arranged on displayed camera moving image 172 (or specific pre-game preparation image 170). Also, display of out-of-area pointer 168, in-area pointer 169, and the like can be similarly applied to specific pre-game preparation image 170. Furthermore, various implementation examples described for the preparation process can be similarly applied to specific pre-game preparation image 170.

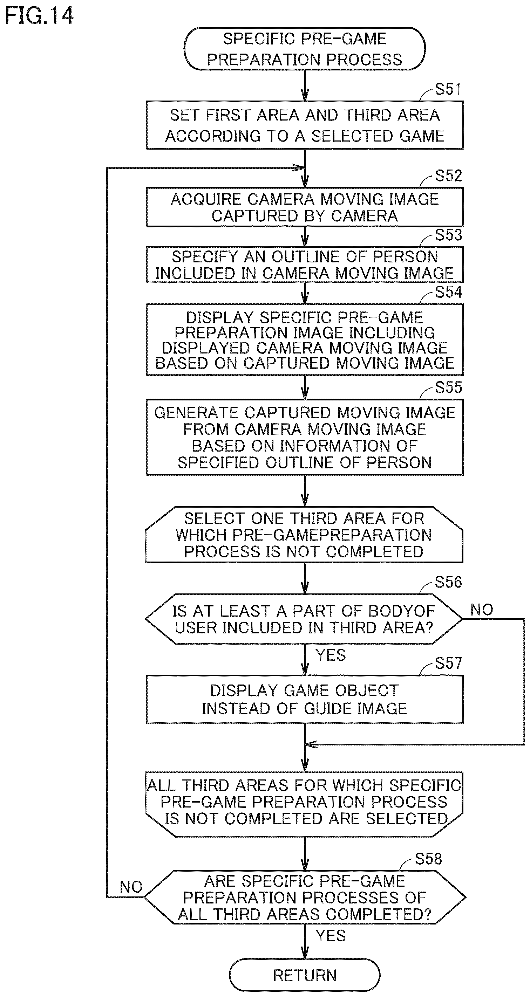

FIG. 14 is a flowchart showing a processing procedure example of the specific pre-game preparation process in Step S5 shown in FIG. 3. Referring to FIG. 14, game apparatus 100 sets one or more first areas 154 and one or more third areas 158 according to a selected game (Step S51). Note that the process of setting in Step S51 may be a process of applying a setting prepared in advance according to a game, or may be a process of determining positions and ranges of first area 154 and third area 158 each time based on results of the previous preparation process (for example, distances Y1, Y2, and the like).

Game apparatus 100 acquires camera moving image 150 captured by camera 118 (Step S52) and specifies an outline of a person included in the acquired camera moving image 150 (Step S53). Then, game apparatus 100 generates captured moving image 152 from camera moving image 150 based on information of the specified outline of the person (Step S54). Game apparatus 100 displays specific pre-game preparation image 170 including displayed camera moving image 172 based on captured moving image 152 (Step S55). Specific pre-game preparation image 170 may include guide image 174 according to circumstances.

Regarding each third area 158 for which the specific pre-game preparation process is not completed, game apparatus 100 determines whether or not at least a part of the body of the user is included in third area 158 (Step S56). If at least a part of the body of the user is included in third area 158 (YES in Step S56), game apparatus 100 determines that the specific pre-game preparation process for third area 158 is completed, and displays object 176 instead of guide image 174 (Step S57). At this time, game apparatus 100 displays object 176 at a position corresponding to the detected at least a part of the body of the user.

When specific pre-game preparation processes of all third areas 158 are completed (YES in Step S58), the process proceeds to Step S6 in FIG. 3.

The processes in Steps S52 to S57 described above may be repeatedly executed at specified intervals (for example, at processing frame intervals executed every 1/60 second) as an example.

According to the specific pre-game preparation process, a user can be guided to an appropriate vertical position or range according to a game. By this guidance, user experience in each game is improved. Also, even in a case where game apparatus 100 can execute a plurality of games and the like, a necessity to align a vertical position or a vertical size among games can be reduced, and thus freedom of game development is improved.

Since horizontal position adjustment is performed first by the preparation process and then vertical position adjustment is performed by the specific pre-game preparation process as necessary, adjustment can be performed more smoothly as compared with a case where horizontal and vertical directions are adjusted simultaneously, and thus user experience is improved. Also, since a partial moving image corresponding to each user can be utilized even during a period from the preparation process until a game process is actually started, user experience is improved.

As another implementation example, if a state in which at least a part of the body of the user is included in all third areas 158 continues for more than a second period of time, it may be determined that the specific pre-game preparation process is completed. In this case, the second period of time may be the same as the first period of time used in the preparation process, but may be shorter than the first period of time.

In the preparation process in which horizontal position adjustment is necessary, a possibility that a process proceeds against a user's intention is reduced by continuing a state for a longer time, while in the specific pre-game preparation process in which it is considered that a necessity for horizontal position adjustment is low, a duration for determination is shortened, and thus the specific pre-game preparation process can be completed early and a game can be started, which improves user experience.

### [F. Game Process]

A game executed by game apparatus 100 according to this embodiment may be any game as long as the game can utilize a camera moving image, but may be, for example, a race game, a card game, a board game, an FPS (First Person Shooter) game, a TPS (Third Person Shooter) game, an action game, a role-playing game, and the like.

A game in which a camera moving image is utilized may be a game executed on one game apparatus 100 or may be a communication-type game by Internet communication or local communication.

In the game process of Step S6 or Step S7 shown in FIG. 3, game apparatus 100 can execute one or more games that change a game state of a player corresponding to first area 154 based on at least a part of a body of a user included in first area 154.

As described above, when a plurality of first areas 154 are set, game apparatus 100 can execute one or more games that respectively change game states of a plurality of players respectively corresponding to a plurality of first areas 154 based on at least a part of a body of a user included in each of the plurality of first areas 154.

A game state of a player includes various states and values regarding a player participating in a game. Changing a game state of a player includes, for example, changing various parameters (for example, score or hit point) regarding a player, affecting an object corresponding to a player, and causing a player to attack another player. Affecting an object corresponding to a player may include, for example, changing behavior of another object in a game, changing parameters possessed by another object, changing a position or display of an avatar representing a player, and changing a part of an object of a player and the like.

Being based on at least a part of a body of a user included in first area 154 may include, for example, detecting a face, an upper body, and the like of a user and executing some process based on a detection result, executing some process based on a change of a portion corresponding to a body of a user, and executing some process based on whether or not a portion corresponding to a body of a user exists and the like.

Game apparatus 100 may execute a game process based not only on information regarding at least a part of a body of a user included in first area 154 but also on other information obtained from first area 154.

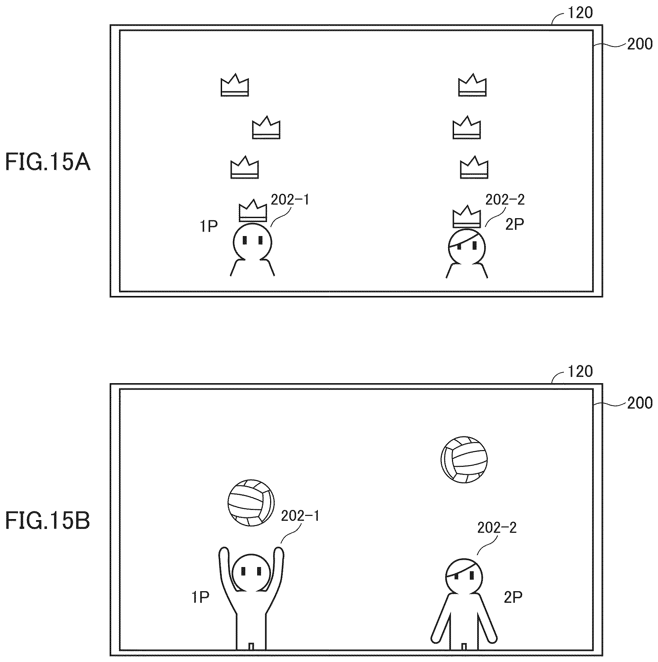

FIGS. 15A and 15B are schematic diagrams each showing an example of a game process executed by game apparatus 100 according to this embodiment. The game process includes a process utilizing a camera moving image.

FIG. 15A is an example of a game image 200 of a game executed following the specific pre-game preparation process shown in FIG. 14. Game image 200 includes in-game camera moving images 202-1 and 202-2 based on captured moving image 152. In-game camera moving image 202 is, for example, a moving image in which portions other than a part including a face of a user among partial moving images 192 are masked. In-game camera moving image 202 may be different for each game to be executed. In the game shown in FIG. 15A, game apparatus 100 advances a game based on positions and orientations of in-game camera moving images 202-1 and 202-2 representing faces of users.

As an example, FIG. 15A shows a game in which a user adjusts a position and an orientation of a face of the user to catch an object falling from an upper side to a lower side of game image 200. As an example, a falling object can be stacked on an object installed above a face of a user. Each player corresponding to each user competes for the number of stacked objects. A display position and an orientation of each in-game image 200 corresponding to each user and states and numbers of stacked objects are examples of a game state of each player.

FIG. 15B shows an example of game image 200 of another game. Game image 200 includes in-game camera moving images 202-1 and 202-2 based on captured moving image 152. In the game shown in FIG. 15B, in-game camera moving images 202-1 and 202-2 are bodies including upper bodies of each user, for example, whole bodies.

As an example, FIG. 15B shows a game in which a player moves arms and the like of the player so as not to drop an object representing a ball falling from an upper side to a lower side of game image 200. A display position and an orientation of in-game image 202 corresponding to each user and a position, a moving direction, and a speed of a ball are examples of a game state of each player.

### [G. Communication-type Game]

The process according to this embodiment is also applicable to communication-type games by Internet communication or local communication. Hereinafter, a process example in a case of a game communicating with another game apparatus 100 will be described.

For example, a communication-type game in which a plurality of players can participate is provided by a plurality of game apparatuses 100 communicating with each other. A configuration may be such that one player participates via one game apparatus 100, or a configuration may be such that a plurality of players can participate via one game apparatus 100.

As an example, it is assumed that player 1 participates in a communication-type game from game apparatus 100-1 and player 2 participates from game apparatus 100-2. At this time, game image 200 is generated in each of game apparatus 100-1 and game apparatus 100-2. Note that generation of game image 200 may be performed in one game apparatus 100, and the generated game image 200 may be transmitted to the other game apparatus 100. In-game camera moving image 202 is used for a communication-type game.

At this time, game apparatus 100-1 generates in-game camera moving image 202 corresponding to player 1 from captured moving image 152, for example. Similarly, game apparatus 100-2 generates in-game camera moving image 202 corresponding to player 2 from captured moving image 152. Then, each of game apparatus 100-1 and game apparatus 100-2 generates game image 200 in which in-game camera moving images 202 respectively corresponding to players 1 and 2 are used based on in-game camera moving image 202 generated by itself and in-game camera moving image 202 received from the other game apparatus 100. In this way, when a communication-type game is executed, game image 200 may be generated in each game apparatus 100 by game control information and in-game camera moving image 202 generated from captured moving image 152 being transmitted and received among a plurality of game apparatuses 100.

As another example, when a communication-type game is executed, captured moving image 152 may be transmitted and received as it is, and game apparatus 100 having received captured moving image 152 may generate in-game camera moving image 202. As an example, when game program 126, which is a communication-type game via the Internet, is executed together with chat application 114, game program 126 being executed may acquire a captured moving image from another game apparatus 100 via chat application 114 being executed. Hereinafter, a captured moving image acquired from another game apparatus 100 is also referred to as "received captured moving image". A received captured moving image may be included in communication data 10. Game program 126 being executed may generate in-game camera moving image 202 corresponding to a player of the another game apparatus 100 from a received captured moving image acquired from the another game apparatus 100. Note that a received captured moving image may not be acquirable from game apparatus 100 not belonging to the same chat group.

A received captured moving image corresponds to captured moving image 152 based on camera moving image 150 captured by camera 118 acquired by another game apparatus 100, and may be the same as captured moving image 152 acquired by another game apparatus 100 or may be a result of some process.

Game program 126 being executed may acquire a received camera moving image and one or more pieces of position information (for example, distance from the upper end of captured moving image 152 shown in FIGS. 10A to 10C to the upper end of face area 190) from another game apparatus 100, and may generate in-game camera moving image 202 based on a received captured moving image from another game apparatus 100 using the acquired one or more pieces of position information.

In this embodiment, a received captured moving image is received via a communication path used by chat application 114, and position information is received via a communication path used by game program 126. Also, game program 126 transmits at least one or more pieces of position information to another game apparatus 100.

In this way, game apparatus 100 may display an in-game camera moving image generated from a received captured moving image at a position corresponding to a player of another game apparatus 100 in a game image based on position information received from the another game apparatus 100. Communication traffic can be reduced as compared with a case where both a received captured moving image and an in-game camera moving image are transmitted and received. Also, since there is a possibility that data volume of position information is smaller than that of a received captured moving image, data volume flowing through a communication path used by game program 126 can be suppressed.

Note that even when chat application 114 is not executed and game program 126 is executed, game apparatus 100 may receive a captured moving image and position information from another game apparatus 100, generate an in-game camera moving image from the camera moving image, and utilize the in-game camera moving image for a game.

### [H. Other Embodiments]

Although a process example in a case where a plurality of users exist in imaging range 119 of camera 118 has been illustrated, a process similar to that described above may be executed in a case where only one user exists in imaging range 119 or in a case where only one user in imaging range 119 participates in a game. In this case, one first area 154 may be set in captured moving image 152, and one second area 156 may be set in association with one first area 154. Also, preparation image 160 displayed in the preparation process may include displayed camera moving image 162 in which one guide image 164 indicating one second area 156 is arranged.

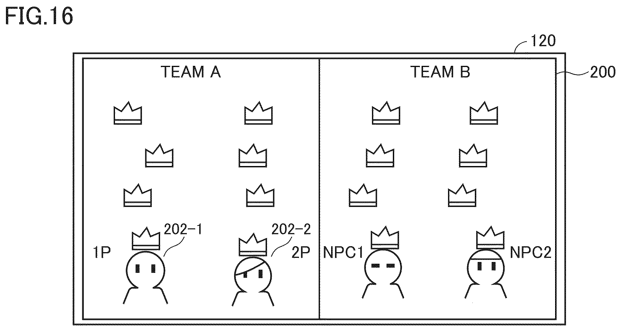

FIG. 16 shows an example of game image 200 in a case where the game shown in FIG. 15A is executed by two users and two non-player objects (hereinafter, also referred to as "NPC"). Two users and two NPCs respectively form teams. In this way, by users and NPCs being displayed and competing, a user can obtain user experience as if the NPC were actually alive or user experience as if the user entered a world of a game.

Note that as shown in FIG. 16, both user USR1 and user USR2 are displayed on one side from the center in a horizontal direction. Therefore, in the preparation process or specific pre-game preparation process, user USR1 and user USR2 may be guided by guide image 164 so as to be located on one side from a center in a horizontal direction of camera moving image 150 or preparation image 160. Alternatively, in the preparation process or specific pre-game preparation process, user USR1 and user USR2 may be guided by guide image 164 so as to be located on one side and the other side from a center in a horizontal direction of camera moving image 150 or preparation image 160, respectively. In this case, by adjusting a display position of partial moving image 192 of each user cut out from captured moving image 152, for example, as shown in FIG. 16, both user USR1 and user USR2 may be displayed on one side from a center in a horizontal direction.

In the above description, an example in which a display position in an up-down direction of partial moving image 192 is adjusted in game introduction image 180, specific pre-game preparation image 170, and game image 200 has been shown, but adjustment of a display position in an up-down direction of partial moving image 192 may be executed in only some of these images. For example, a display position in an up-down direction of partial moving image 192 may not be adjusted in game introduction image 180 and may be adjusted in specific pre-game preparation image 170 and game image 200. For example, in a game introduction process, in a case where each user is simply displayed as if each user were in a virtual space, user experience may be superior if a height difference of each user in a real world or a distance from camera 118 is also reflected in game introduction image 180.

In the above description, a process in which specific pre-game preparation process is executed when a specific game is selected has been illustrated, but specific pre-game preparation process may not be executed regardless of which game is selected. That is, specific pre-game preparation process does not necessarily have to be implemented. Also, in the above description, a process in which specific pre-game preparation process is executed when a specific game is selected after a preparation process is executed has been illustrated, but the preparation process does not have to be executed. For example, the number of games executed by game apparatus 100 may be one, and a process for preparation may be executed before the one game is executed. Alternatively, there may be a plurality of games executed by game apparatus 100, and a process for preparation may be executed before each game is executed. In this case, the process for preparation or specific pre-game preparation process may be regarded as "preparation process".

In the above description, game apparatus 100 was capable of executing one or more games. This may mean that game apparatus 100 is capable of executing one game program or a plurality of game programs. Also, it may mean that one game program executed by game apparatus 100 includes a plurality of games. A plurality of games included in one game program may mean, for example, games having different rules. For example, a plurality of games are a plurality of mini-games, and a win or loss among players may be determined in each mini-game, and a final win or loss may be determined according to results of the plurality of mini-games.

Even in an application other than a game program, an in-game camera moving image may be usable. For example, an in-game camera moving image can be used in a video conference application.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

## Claims

1. A computer-implemented method comprising:
performing game operations,
wherein the game operations comprise:
acquiring a captured moving image (152) based on a camera moving image (150) captured by a camera (118);
with respect to a plurality of first areas (154) arranged side by side in an image of the captured moving image, executing (S6; S7) one or more games, each of which changes game states of a plurality of players respectively corresponding to the plurality of first areas, based on at least a part of a body of a respective user included in each of the plurality of first areas; and
executing (S2) a preparation process before execution of the one or more games,
wherein the preparation process comprises:
displaying (S26) a preparation image (160) in which a plurality of guide images (164) respectively indicating a plurality of second areas (156) arranged side by side and respectively corresponding to the plurality of first areas are arranged on a displayed camera moving image (162; 172) based on the captured moving image; and
determining (S27) that at least a part of the body of the respective user is included in each of the plurality of second areas.

2. The computer-implemented method according to Claim 1, wherein
the one or more games include a plurality of games in each of which at least a vertical position or a vertical size of the first areas is different,
the game operations comprise executing (S5) a specific pre-game preparation process after the preparation process and before at least one game among the one or more games is executed, and
the specific pre-game preparation process comprises:
displaying (S55) a specific pre-game preparation image (170) in which a plurality of second guide images (174) respectively indicating a plurality of third areas (158) arranged side by side and respectively corresponding to the plurality of first areas in the at least one game before execution are arranged on the displayed camera moving image based on the captured moving image; and
determining (S56, S57) that at least a part of the body of the respective user is included in each of the plurality of third areas.

3. The computer-implemented method according to Claim 2, wherein
the preparation process comprises determining (S27) that a state in which at least a part of the body of the respective user is included in all of the plurality of second areas continues for more than a first period of time, and
the specific pre-game preparation process comprises either one of:
determining that at least a part of the body of the respective user is included in all of the plurality of third areas; or
determining that a state in which at least a part of the body of the respective user is included in all of the plurality of third areas continues for more than a second period of time shorter than the first period of time.

4. The computer-implemented method according to Claim 2 or 3, wherein when it is determined that at least a part of the body of the user is included in a third area among the plurality of third areas, the specific pre-game preparation process comprises displaying, at a position corresponding to at least a part of the body of the user included in the third area, an object (176) that is the same as an object displayed during execution of the at least one game before execution.

5. The computer-implemented method according to any of Claims 1 to 4, wherein
the preparation process comprises determining that a state in which at least a part of the body of the respective user is included in a second area among the plurality of second areas continues for more than a first period of time for all of the plurality of second areas.

6. The computer-implemented method according to Claim 5, wherein
the preparation process comprises, when at least a part of the body of the respective user is included in a second area among the plurality of second areas for all of the plurality of second areas, displaying the plurality of guide images in a display mode different from a display mode in other cases.

7. The computer-implemented method according to any of Claims 1 to 6, wherein
the preparation process comprises changing a correspondence between the plurality of first areas and the plurality of players according to a user operation.

8. The computer-implemented method according to Claim 7, wherein
the one or more games include a plurality of games in each of which at least a vertical position or a vertical size of the first areas is different,
the game operations comprise executing (S5) a specific pre-game preparation process after the preparation process and before at least one game among the one or more games is executed,
the specific pre-game preparation process comprises:
displaying (S55) a specific pre-game preparation image (170) in which a plurality of second guide images (174) respectively indicating a plurality of third areas arranged side by side and respectively corresponding to the plurality of first areas in the at least one game before execution are arranged on the displayed camera moving image based on the captured moving image; and
determining (S56, S57) that at least a part of the body of the respective user is included in each of the plurality of third areas, and
the game operations comprise displaying an image in which a plurality of partial moving images (192) respectively corresponding to the plurality of first areas cut out from the captured moving image are arranged at positions according to the changed correspondence after the preparation process and before at least one game among the one or more games is executed.

9. The computer-implemented method according to any of Claims 1 to 8, wherein
the game operations comprise executing one or more games, each of which changes a game state of a player corresponding to a first area among the plurality of first areas based on at least a part of a body of a user included in the first area in an image of the captured moving image,
the preparation process comprises:
displaying (S26) a preparation image (160) in which a guide image (164) indicating a second area among the plurality of second areas corresponding to the first area is arranged on the displayed camera moving image based on the captured moving image; and
determining (S27) that at least a part of the body of the user is included in the second area.

10. The computer-implemented method according to any of Claims 1 to 9, wherein
at least a part of the body of the respective user is a face (190) of the respective user.

11. The computer-implemented method according to any of Claims 1 to 10, wherein
the preparation process comprises, when a face of the respective user is not included in at least one second area among the plurality of second areas, displaying a pointer (168; 169) indicating a position of the face of the respective user.

12. The computer-implemented method according to Claim 11, wherein
the preparation process comprises, when the face of the respective user is included in any second area among the plurality of second areas, displaying the pointer in a display mode different from a display mode when the face of the respective user is not included in at least one second area among the plurality of second areas.

13. The computer-implemented method according to any of Claims 1 to 12, wherein
the game operations comprise determining a vertical position of a moving image of the respective user in an image displayed after the preparation process, based on a vertical position of the respective user in a first area corresponding to the respective user among the plurality of first areas determined in the preparation process.

14. The computer-implemented method according to any of Claims 1 to 13, wherein
the game operations comprise:
displaying an image in which a plurality of partial moving images (192), which respectively correspond to the plurality of first areas and are cut out from the captured moving image, are arranged; and
determining a vertical position of each of the plurality of partial moving images in an image displayed after the preparation process, based on a vertical position of the respective user in a first area corresponding to the respective user among the plurality of first areas determined in the preparation process.

15. A computer program (112; 126) causing a computer (100) to perform the computer-implemented method according to any of Claims 1 to 14.

16. A system (100) configured to perform the computer-implemented method according to any of Claims 1 to 14.
